# EUROPEAN PATENT SPECIFICATION

(11) **EP 3 477 984 B1**
(45) Date of publication and mention of the grant of the patent: **14.04.2021**
(21) Application number: 16914499.5
(22) Date of filing: 30.08.2016
(51) Int. Cl.: H04W 16/28, H04W 74/08

(54) **RANDOM ACCESS METHODS, APPARATUS AND SYSTEM**
ZUFALLSZUGRIFFSVERFAHREN, -VORRICHTUNGEN UND -SYSTEM
PROCÉDÉS, APPAREILS ET SYSTÈME D'ACCÈS ALÉATOIRE

(43) Date of publication of application: 01.05.2019
(73) Proprietor: Huawei Technologies Co., Ltd., Longgang District Shenzhen, Guangdong 518129 (CN)
(72) Inventor: JIA, Xiaoqian, Shenzhen Guangdong 518129 (CN); LUO, Haiyan, Shenzhen Guangdong 518129 (CN)
(74) Representative: Körber, Martin Hans
(86) International application number: PCT/CN2016/097389
(87) International publication number: WO 2018/039932

(56) References cited:
- WO-A1-2015/166840
- WO-A1-2015/166840
- CN-A- 104 956 606
- CN-A- 105 379 357
- CN-A- 106 358 216
- CN-A- 106 358 312
- US-A1- 2015 382 205
- US-A1- 2016 029 358
- ZTE: "Beamformed Random Access in NR", 3GPP DRAFT; R1-166419 BEAMFORMED RANDOM ACCESS IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140220, Retrieved from the Internet: URL:http://www.3gpp.org/ftp/Meetings_3GPP_ SYNC/RAN1/Docs/ [retrieved on 2016-08-21]
- ZTE: "NR Random access procedure", 3GPP DRAFT; R2-165110 RANDOM ACCESS IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126733, Retrieved from the Internet: URL:http://www.3gpp.org/ftp/Meetings_3GPP_ SYNC/RAN2/Docs/ [retrieved on 2016-08-21]

## Description

### TECHNICAL FIELD

The present invention relates to the communications field, and in particular, to random access methods, apparatus, and system.

### BACKGROUND

The development of communications technologies imposes more demands for frequency resources. Spectrum resources are limited, and therefore, a new network may probably operate at a high frequency in the future. The new network has high capacity and performance, and a better service can be provided for a user when a terminal accesses a high frequency network.

According to a channel fading principle, a fading intensity is proportional to a frequency. A high frequency signal is easy to fade, and a diffraction capability of the high frequency signal is weaker than that of a relatively low frequency signal. Therefore, a higher frequency of the high frequency network indicates a smaller coverage area. Because of concentrated signal energy, a beamforming (beamforming) technology is used to expand the coverage area of the high frequency network, so that a terminal at the edge of the high frequency network can access the high frequency network and enjoy a good service of the high frequency network.

Currently, a solution of expanding the coverage area of the high frequency network in a beamforming manner is as follows: The terminal gives priority to random access to the high frequency network, establishes a radio resource control (English full name: Radio Resource Control, RRC) connection to an access device of the high frequency network, and then sends a sounding reference signal (English full name: Sounding Reference Signal, SRS) to the access device of the high frequency network. The access device estimates, based on symmetry of an uplink channel and a downlink channel, a determined optimal beam between the terminal and the access device. Then data transmission is performed between the terminal and the access device in the beamforming manner.

When the terminal randomly accesses the high frequency network, the terminal first needs to establish a connection to the access device, and then accesses a beam (beam) after interaction. Consequently, the terminal cannot access the beam in time, and a success rate at which the terminal accesses the high frequency network is low. WO 2015/166840 A1 discloses that a user equipment selects a specific reference signal transmitted from a base station based on a measurement result.

### SUMMARY

Embodiments of the present invention provide a random access method according to independent claim 1 or 6, apparatus according to independent claim 12 or 14, and system according to claim 15, so that a terminal can access a beam in time, thereby increasing a success rate at which the terminal accesses a network. Additional features of the invention are provided in the dependent claims. In the following, parts of the description and drawings referring to embodiments which are not covered by the claims are not presented as embodiments of the invention, but as examples useful for understanding the invention.

The following technical solutions are used in the embodiments of the present invention to achieve the foregoing objective.

According to a first aspect, a random access method is provided, specifically including: receiving, by a terminal, a plurality of signals generated by a first access device in a beamforming manner on a plurality of beams; determining a beam of a strongest signal in the plurality of beams; generating a preamble signal for the beam of the strongest signal based on configuration information; and sending, by the terminal, the generated preamble signal to the first access device.

In this way, before accessing the first access device, to be specific, in an initial access stage of the terminal, the terminal has determined that the beam of the strongest signal is used as a beam accessing the first access device, and sends the preamble signal of the determined beam of the strongest signal to the first access device. Therefore, the first access device may identify, based on the received preamble signal, the beam that is of the strongest signal and that is determined by the terminal, and establish the connection to the terminal by using the beam, so as to complete the random access for the terminal. In the process, the terminal accesses the beam of the first access device in time. This increases a success rate at which the terminal accesses the first access device.

Optionally, the configuration information may include a beam configuration of the beam of the strongest signal, or the configuration information may include an identifier of the beam of the strongest signal and a cell configuration, or the configuration information may include a beam configuration of the beam of the strongest signal and an identifier of the beam of the strongest signal.

The beam configuration of the beam of the strongest signal includes at least one preamble allocated by the first access device to the beam of the strongest signal and time-frequency resource information used to send the preamble signal. The time-frequency resource information is used to indicate a time-frequency resource occupied when the preamble signal is sent. The cell configuration includes at least one preamble allocated by a network to the network provided by the first access device and time-frequency resource information used to send the preamble signal. The identifier of the beam is used to indicate a unique beam.

A preamble signal of a beam may uniquely determine the beam.

Optionally, when a preamble signal of a beam is generated, a preamble in the beam configuration of the beam may be selected through contention as the preamble signal, and a time-frequency resource in the beam configuration of the beam may be selected through contention to send the preamble signal. In this way, a receiver can uniquely determine the beam based on the beam configuration, to be specific, by using content of the preamble signal and the time-frequency resource occupied to send the preamble signal.

Optionally, when a preamble signal of a beam is generated, an identifier of the beam may be added to the preamble signal of the beam, so that a receiver can uniquely determine the beam by using the beam identifier carried by the preamble signal.

Further, when the network provided by the first access device is a high frequency network, the terminal can access the high frequency network in time in the solution of this application, thereby increasing a success rate at which the terminal accesses the high frequency network.

With reference to the first aspect, in a possible implementation, to improve feasibility of the solution, the configuration information may include the beam configuration of the beam of the strongest signal, and the receiving, by a terminal, a plurality of signals on a plurality of beams from a first access device may be specifically implemented as: receiving, by the terminal, a broadcast signal on the beam of the strongest signal, where the broadcast signal is used to broadcast the beam configuration of the beam of the strongest signal.

In another possible implementation, when the configuration information includes the beam configuration of the beam of the strongest signal, the method may further include: receiving, by the terminal, the beam configuration of the beam of the strongest signal from a second access device. In other words, the second access device assists the first access device in broadcasting the beam configuration of the beam of the strongest signal.

Specifically, the terminal is within a coverage area of a network provided by the second access device.

Further, if the network provided by the second access device and the network provided by the first access device are co-sited, the second access device may directly obtain and broadcast a beam configuration of each beam configured by the first access device. If the network provided by the second access device and the network provided by the first access device are not co-sited, the second access device may exchange information with the first access device through an X2 interface, to obtain and broadcast a beam configuration of each configured beam.

With reference to the first aspect or any of the foregoing possible implementations, in another possible implementation, when the configuration information is the beam configuration of the beam of the strongest signal, the generating, by the terminal, a preamble signal for the beam of the strongest signal based on configuration information may be specifically implemented as follows: The terminal first obtains preambles in the beam configuration of the beam of the strongest signal, and time-frequency resource information used to send a random access preamble sequence; selects, through contention, one preamble as the random access preamble sequence; obtains, through contention, one time-frequency resource as a random access time-frequency resource; and sends the selected random access preamble sequence, which is used as the preamble signal, to the first access device on the random access time-frequency resource obtained through contention. In this way, when receiving the preamble signal, the first access device may search, based on content of the preamble signal and the occupied time-frequency resource, a beam configuration of each beam, so as to uniquely determine the beam of the strongest signal that is determined by the terminal, to be specific, uniquely determine a beam selected by the terminal to access the network provided by the first access device.

With reference to the first aspect or any of the foregoing possible implementations, in another possible implementation, the receiving, by a terminal, a plurality of signals on a plurality of beams from a first access device may be specifically implemented as: when the terminal receives the broadcast signal on the beam of the strongest signal, receiving, by the terminal, a synchronization signal on the beam of the strongest signal.

It should be noted that when the plurality of signals on the plurality of beams from the first access device include a broadcast signal and a synchronization signal, the terminal may determine any beam of a strongest signal in the broadcast signal or the synchronization signal as the beam of the strongest signal in the plurality of beams.

With reference to the first aspect or any of the foregoing possible implementations, in another possible implementation, the configuration information may include an identifier of the beam of the strongest signal and a cell configuration, or the configuration information includes a beam configuration of the beam of the strongest signal and an identifier of the beam of the strongest signal. The receiving, by a terminal, a plurality of signals on a plurality of beams from a first access device may be specifically implemented as: receiving, by the terminal, a synchronization signal or a broadcast signal on the beam of the strongest signal, where the synchronization signal or the broadcast signal on the beam of the strongest signal carries the identifier of the beam of the strongest signal.

With reference to the first aspect or any of the foregoing possible implementations, in another possible implementation, when the configuration information includes the identifier of the beam of the strongest signal and the cell configuration, or the configuration information includes the beam configuration of the beam of the strongest signal and the identifier of the beam of the strongest signal, the generating, by the terminal, a preamble signal for the beam of the strongest signal based on configuration information may be specifically implemented as follows: The terminal selects, through contention, one preamble as the preamble signal from the cell configuration or from the beam configuration of the beam of the strongest signal, selects, through contention, a time-frequency resource used to send the preamble signal, sends the preamble signal on the time-frequency resource selected through contention, and adds, to the preamble signal, the identifier of the beam that is of the strongest signal and that is determined by the terminal. In this way, when receiving the preamble signal, the first access device can quickly and accurately identify the beam based on the beam identifier carried by the preamble signal. This effectively ensures accuracy in which the terminal communicates with the access device in the beamforming manner.

With reference to the first aspect or any of the foregoing possible implementations, in another possible implementation, there may be a plurality of forms of beam identifiers. Optionally, the broadcast signal includes the beam identifier, in other words, the beam identifier is explicitly carried. Optionally, the first access device uses a beam uniquely corresponding to a downlink synchronization signal (primary synchronization signal (English full name: Primary Synchronization Signal, PSS)/secondary synchronization signal (English full name: Secondary Synchronization Signal, SSS)), in other words, the synchronization signal implicitly carries the beam identifier.

Specifically, if physical cell identifiers (English full name: Physical Cell Identifier, PCI) of the beam beam are different from each other, a PCI uniquely corresponding to the PSS/SSS may be used to identify different beams. If PCIs of beams are the same, similarly, an extended PSS/SSS may be used to identify different beams.

With reference to the first aspect or any of the foregoing possible implementations, in another possible implementation, when the configuration information includes the identifier of the beam of the strongest signal and the cell configuration, or the configuration information includes the beam configuration of the beam of the strongest signal and the identifier of the beam of the strongest signal, the receiving, by a terminal, a beam configuration of the beam of the strongest signal or a cell configuration may be specifically implemented as: receiving the beam configuration of the beam of the strongest signal or the cell configuration from a second access device; or the broadcast signal on the beam of the strongest signal is used to broadcast the beam configuration of the beam of the strongest signal or the cell configuration.

According to a second aspect, the present invention provides another random access method, specifically including: sending, by a first access device, a plurality of signals to a terminal on a plurality of beams generated in a beamforming manner; receiving, by the first access device, a preamble signal of a beam of a strongest signal, where the preamble signal is sent by the terminal; and identifying, by the first access device based on the received preamble signal, a beam on which the terminal accesses a network provided by the first access device, and establishing an RRC connection to the terminal.

In the random access method provided in the present invention, the first access device sends signals to the terminal on the plurality of beams generated in the beamforming manner, and this expands a coverage area of the network provided by the first access device. The terminal may determine the beam of the strongest signal in an access stage based on the plurality of signals on the plurality of beams, and send the preamble signal of the beam of the strongest signal to the terminal. The first access device can accurately identify, based on the received preamble signal, an optimal beam selected by the terminal to access the first access device. In the process, the terminal accesses the beam in time. This increases a success rate at which the terminal accesses the network provided by the first access device.

A preamble signal of a beam may uniquely determine the beam.

Corresponding to generating a preamble signal of a beam in the first aspect, optionally, when receiving a preamble signal of a beam, the first access device may uniquely determine the beam based on the beam configuration, to be specific, by using content of the preamble signal and a time-frequency resource occupied to send the preamble signal. Alternatively, the first access device may uniquely determine the beam by using a beam identifier carried by the preamble signal.

With reference to the second aspect, in a possible implementation, the sending, by a first access device, a plurality of signals to a terminal on a plurality of beams may be specifically implemented as: sending, by the first access device, a broadcast signal to the terminal on the plurality of beams, where the broadcast signal is used to broadcast a beam configuration of the first access device. Correspondingly, the identifying, by the first access device based on the preamble signal, a beam on which the terminal accesses the first access device, and establishing an RRC connection to the terminal may be implemented as: identifying, by the first access device based on the preamble signal and the beam configuration of the first access device, the beam on which the terminal accesses the network provided by the first access device, and establishing the RRC connection.

A beam configuration of an access device is a preamble allocated by the access device to each beam of the access device and time-frequency resource information used to send the preamble signal.

With reference to the second aspect or any of the foregoing possible implementations, in another possible implementation, the identifying, by the first access device based on the preamble signal and the beam configuration of the beam of the strongest signal, the beam on which the terminal accesses the network provided by the first access device may be specifically implemented as: identifying, by the first access device, that the beam on which the terminal accesses the network provided by the first access device is a beam corresponding to the preamble signal received by the first access device and the time-frequency resource occupied by the preamble signal in the beam configuration.

With reference to the second aspect or any of the foregoing possible implementations, in another possible implementation, to save a system resource and ensure a success rate and accuracy in which the terminal obtains the beam configuration, the first access device may send the beam configuration of the first access device to the terminal by using a second access device instead of the broadcast signal.

With reference to the second aspect or any of the foregoing possible implementations, in another possible implementation, the sending, by the first access device, the beam configuration of the first access device to the terminal by using a second access device may be specifically implemented as: sending, by the first access device, the beam configuration of the first access device to the second access device, and forwarding, by the second access device, the beam configuration of the first access device to the terminal. In other words, the beam configuration of the first access device is sent to the terminal with the assistance of the second access device.

With reference to the second aspect or any of the foregoing possible implementations, in another possible implementation, the sending, by a first access device, a plurality of signals to a terminal on a plurality of beams may be specifically implemented as: sending, by the first access device, a broadcast signal to the terminal on the plurality of beams. When the broadcast signal is used to broadcast a beam configuration of the first access device, the sending, by a first access device, a plurality of signals to a terminal on a plurality of beams further includes: sending, by the first access device, a synchronization signal to the terminal on the plurality of beams. In the implementation, the first access device sends both the synchronization signal and the broadcast signal to the terminal on the plurality of beams, and the broadcast signal is used to broadcast a beam configuration of each beam.

Further, when the first access device sends both the synchronization signal and the broadcast signal to the terminal on the plurality of beams, the terminal may determine the beam of the strongest signal based on any one of the synchronization signal or the broadcast signal on the plurality of beams.

With reference to the second aspect or any of the foregoing possible implementations, in another possible implementation, the sending, by a first access device, a plurality of signals to a terminal on a plurality of beams may be specifically implemented as: sending, by the first access device, a synchronization signal to the terminal on the plurality of beams, and broadcasting, by the first access device, the beam configuration of the first access device to the terminal by using the second access device.

With reference to the second aspect or any of the foregoing possible implementations, in another possible implementation, the sending, by a first access device, a plurality of signals to a terminal on a plurality of beams may be specifically implemented as: sending, by the first access device, a synchronization signal or a broadcast signal to the terminal on the plurality of beams, where the synchronization signal or the broadcast signal carries an identifier of each beam. In this way, after receiving the plurality of signals on the plurality of beams, the terminal may obtain the identifier of the determined beam of the strongest signal, and add the identifier to the preamble signal to provide the identifier for the first access device, so that the first access device identifies the beam that is of the strongest signal and that is determined by the terminal.

With reference to the second aspect or any of the foregoing possible implementations, in another possible implementation, the preamble signal carries the identifier of the beam that is of the strongest signal and that is determined by the terminal.

With reference to the second aspect or any of the foregoing possible implementations, in another possible implementation, when the preamble signal carries the identifier of the beam that is of the strongest signal and that is determined by the terminal, the first access device identifies that the beam on which the terminal accesses the network provided by the first access device is a beam indicated by the beam identifier carried by the preamble signal.

With reference to the second aspect or any of the foregoing possible implementations, in another possible implementation, the method further includes: sending, by the first access device, a beam configuration of the first access device or a cell configuration to the terminal by using a second access device; or the broadcast signal is used to broadcast a beam configuration of the first access device or a cell configuration.

The cell configuration is described in detail in the first aspect, and details are not described herein again.

With reference to the second aspect or any of the foregoing possible implementations, in another possible implementation, the method further includes: receiving, by the first access device, a beam configuration that is sent and allocated by a third access device, and broadcasting, by the first access device, the beam configuration allocated by the third access device.

According to a third aspect, an embodiment of the present invention provides a terminal, and the apparatus may implement a function performed by the terminal in the foregoing method example. The function may be implemented by hardware, or may be implemented by hardware executing corresponding software. The hardware or the software includes one or more modules corresponding to the foregoing function.

With reference to the third aspect, in a possible implementation, a structure of the terminal includes a processor and a transceiver, and the processor is configured to support the terminal in performing a corresponding function in the foregoing method. The transceiver is configured to support the terminal in communicating with another network element. The terminal may further include a memory. The memory is configured to couple to the processor and store necessary program instructions and data of the terminal.

According to a fourth aspect, an embodiment of the present invention provides a first access device, and the first access device may implement a function performed by the first access device in the foregoing method example. The function may be implemented by hardware, or may be implemented by hardware executing corresponding software. The hardware or the software includes one or more modules corresponding to the foregoing function.

With reference to the fourth aspect, in a possible implementation, a structure of the first access device includes a processor and a transceiver, and the processor is configured to support the first access device in performing a corresponding function in the foregoing method. The transceiver is configured to support the first access device in communicating with another network element. The first access device may further include a memory. The memory is configured to couple to the processor and store necessary program instructions and data of the apparatus.

According to a fifth aspect, an embodiment of the present invention provides a random access system. The system includes at least one terminal according to any one of the foregoing aspects or any one of the foregoing possible implementations and at least one first access device according to any one of the foregoing aspects or any one of the foregoing possible implementations.

According to a sixth aspect, an embodiment of the present invention provides a computer storage medium, configured to store a computer software instruction used by the foregoing terminal, and the computer storage medium includes a program designed to perform the foregoing aspects.

According to a seventh aspect, an embodiment of the present invention provides a computer storage medium, configured to store a computer software instruction used by the foregoing first access device, and the computer storage medium includes a program designed to perform the foregoing aspects.

The solutions provided in the third aspect to the seventh aspect are used to implement the random access method provided by the first aspect or the second aspect. Therefore, the solutions have same beneficial effects with the first aspect or the second aspect, and details are not described herein again.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a network architecture according to an embodiment of the present invention;
FIG. 2 is a schematic structural diagram of a terminal 20 according to an embodiment of the present invention;
FIG. 3 is schematic structural diagram of a first access device 30 according to an embodiment of the present invention;
FIG. 4 is a schematic diagram of a scenario of a random access method according to an embodiment of the present invention;
FIG. 5 is a schematic flowchart of a random access method according to an embodiment of the present invention;
FIG. 6 is a schematic structural diagram of another terminal 20 according to an embodiment of the present invention;
FIG. 7 is a schematic structural diagram of still another terminal 20 according to an embodiment of the present invention;
FIG. 8 is schematic structural diagram of another first access device 30 according to an embodiment of the present invention;
FIG. 9 is schematic structural diagram of still another first access device 30 according to an embodiment of the present invention; and
FIG. 10 is a schematic structural diagram of a random access system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In a current random access process, an access device sends a synchronization signal in a conventional manner, so that a terminal finds and accesses a network. The access device communicates with the terminal in a beamforming manner only when the terminal performs data transmission, so as to enlarge a system capacity. However, in a terminal access stage, because of a small coverage area of a high frequency network, the terminal cannot access a beam generated in a beamforming manner in time in the current random access process. Consequently, a success rate at which the terminal accesses the high frequency network is not high.

In view of this, according to a basic principle of the present invention, an access device sends a plurality of signals to a terminal on a plurality of beams generated in a beamforming manner. The terminal determines a beam of a strongest signal based on intensities of the signals, and sends a preamble signal to the access device based on the beam of the strongest signal, so that the access device can uniquely and accurately identify, based on the received preamble signal, the beam that is of the strongest signal and that is determined by the terminal. The beam of the strongest signal is determined before the access, so that the terminal can access the beam in time. This greatly increases a success rate at which the terminal randomly accesses the network.

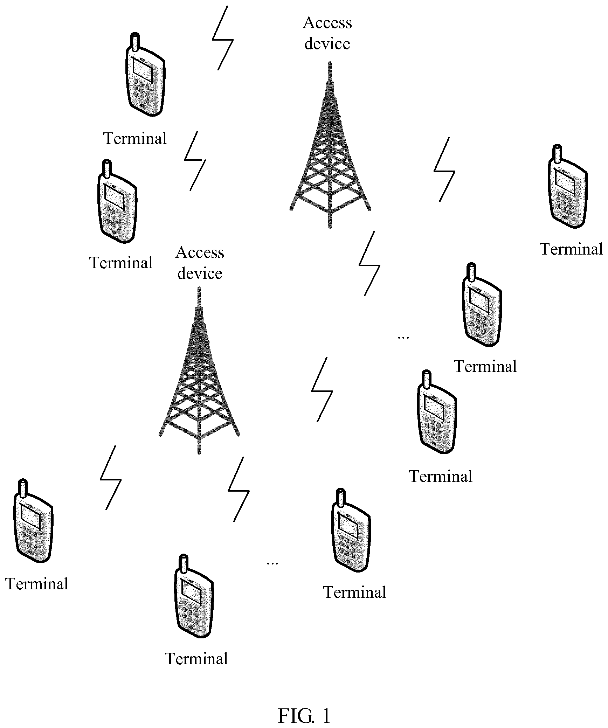

A random access method provided in the embodiments of the present invention is applied to a network architecture shown in FIG. 1. The network architecture shown in FIG. 1 includes at least one access device and at least one terminal. Quantities of access devices and terminals in FIG. 1 are merely an example, and constitute no limitation on quantities of access devices and terminals in the network architecture. The at least one access device in FIG. 1 is configured to provide at least one network, and the terminal randomly accesses the network to implement a service of the terminal.

Optionally, the access device in FIG. 1 may be a base station or another network element having an access function. This is not specifically limited in this embodiment of the present invention.

It should be understood that in this embodiment of the present invention, the terminal may be referred to as user equipment (English full name: User Equipment, UE), a mobile station (English full name: Mobile Station, MS), a mobile terminal (English full name: Mobile Terminal), or the like. The terminal may communicate with one or more core networks through a radio access network (Radio Access Network, RAN). For example, the terminal may be a mobile phone (or referred to as a "cellular" phone) or a computer with a mobile terminal. For example, the terminal may be a portable, pocket-sized, handheld, computer built-in, or in-vehicle mobile apparatus. The terminal exchanges voice and/or data with the radio access network.

The random access method provided in the embodiments of the present invention may be performed by a terminal or a first access device provided in the embodiments of the present invention.

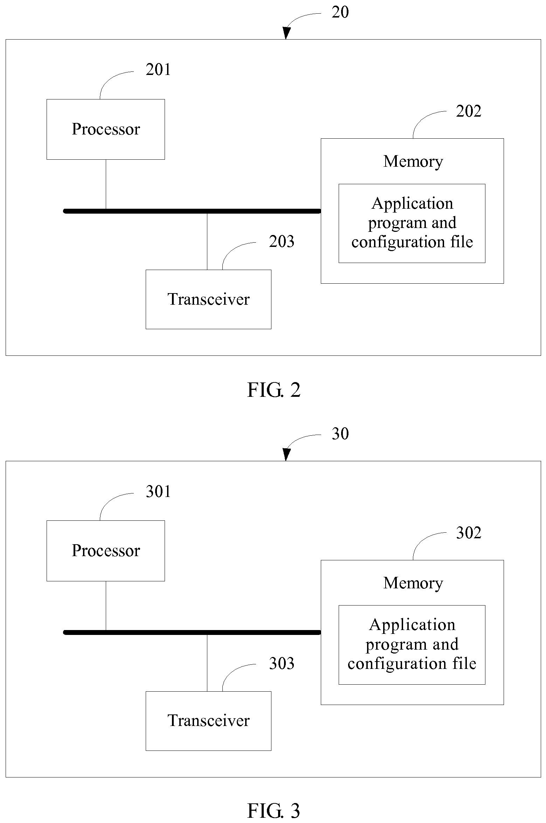

FIG. 2 is a schematic structural diagram of a terminal 20 in the embodiments of the present invention. The terminal 20 may be a part of or all of any terminal in FIG. 1.

As shown in FIG. 2, the terminal 20 may include a processor 201, a memory 202, and a transceiver 203.

The following specifically describes each component of the terminal 20 with reference to FIG. 2:

The memory 202 may be a volatile memory (English full name: volatile memory) such as a random-access memory (English full name: random-access memory, RAM), a non-volatile memory (English full name: non-volatile memory) such as a read-only memory (English full name: read-only memory, ROM), a flash memory (English full name: flash memory), a hard disk drive (English full name: hard disk drive, HDD) or a solid-state drive (English full name: solid-state drive, SSD), or a combination of such types of memories, configured to store related application programs and configuration files that can implement the method in the present invention.

As a control center of the terminal 20, the processor 201 may be a central processing unit (English full name: central processing unit, CPU) or an application-specific integrated circuit (English full name: Application Specific Integrated Circuit, ASIC), or is configured as one or more integrated circuits for implementing the embodiments of the present invention, for example, one or more microprocessors (English full name: digital signal processor, DSP) or one or more field programmable gate arrays (English full name: Field Programmable Gate Array, FPGA). The processor 201 may execute various functions of the terminal 20 by running or executing the software program and/or the module stored in the memory 202 and by invoking the data stored in the memory 202.

The transceiver 203 may be a transceiver antenna of the terminal 20.

Further, FIG. 3 is a schematic structural diagram of a first access device 30 in the embodiments of the present invention. The first access device 30 may be a part of or all of any access device (a first access device) in FIG. 1.

As shown in FIG. 3, the first access device 30 may include a processor 301, a memory 302, and a transceiver 303.

The following specifically describes each component of the first access device 30 with reference to FIG. 3.

The memory 302 may be a volatile memory such as a RAM, a non-volatile memory such as a ROM, a flash memory, an HDD, an SSD, or a combination of such types of memories, configured to store related application programs and configuration files that can implement the method in the present invention.

As a control center of the first access device 30, the processor 301 may be a CPU or an ASIC, or is configured as one or more integrated circuits for implementing the embodiments of the present invention, for example, one or more DSPs or one or more FPGAs. The processor 301 may execute various functions of the first access device 30 by running or executing the software program and/or the module stored in the memory 302 and by invoking the data stored in the memory 302.

The transceiver 303 may be a transceiver antenna of the first access device 30.

The following specifically describes the embodiments of the present invention with reference to the accompanying drawings.

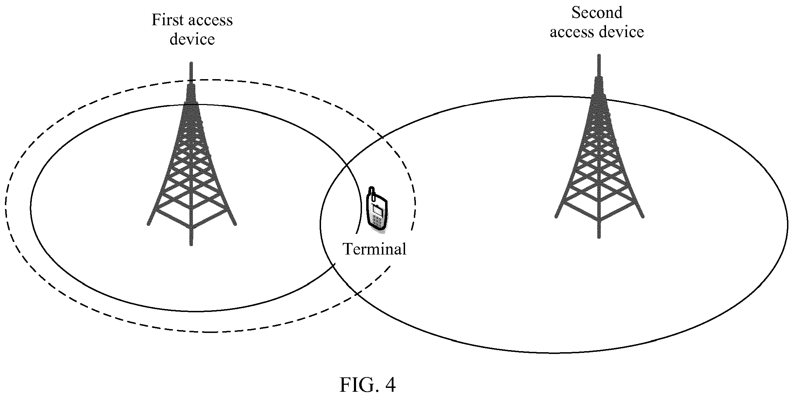

An embodiment of the present invention provides a random access method, applied to a scenario shown in FIG. 4. In the scenario shown in FIG. 4, a terminal is located at an edge of a coverage area (denoted by a solid line shown in FIG. 4) of a network provided by a first access device, the terminal is located within an expanded coverage area (denoted by a dashed line shown in FIG. 4) of the network provided by the first access device, and the terminal is located within a coverage area (denoted by a solid line shown in FIG. 4) of a network provided by a second access device. By using the random access method provided in this embodiment of the present invention, the terminal accurately accesses a beam in time, and further accurately accesses, in time, the network provided by the first access device.

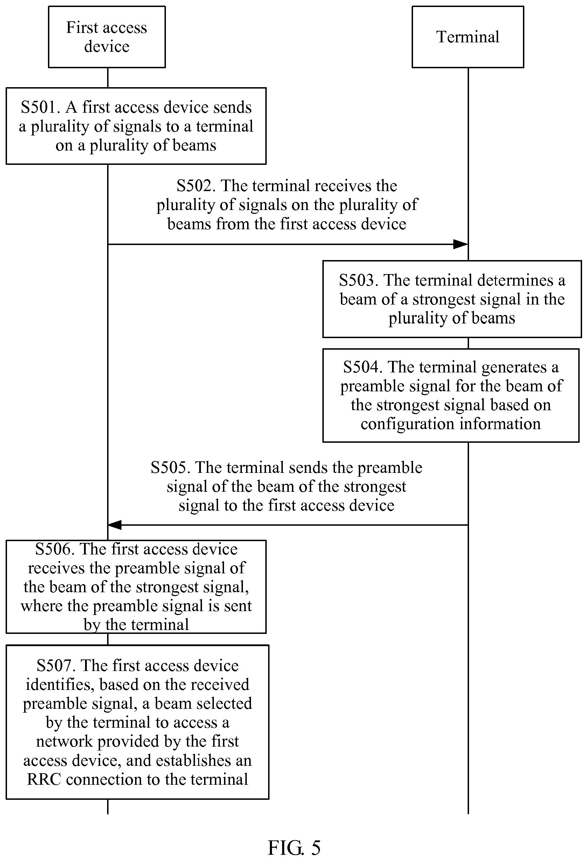

In this embodiment of the present invention, an interaction process between the terminal and the first access device or between the terminal and each of the first access device and the second access device is used as an example to describe in detail the random access method provided in this embodiment of the present invention. As shown in FIG. 5, the random access method provided in this embodiment of the present invention may include the following steps.

S501. The first access device sends a plurality of signals to the terminal on a plurality of beams.

The plurality of beams are generated in a beamforming manner, and are used to expand a coverage area of the network provided by the first access device.

Optionally, the plurality of signals sent by the first access device to the terminal on the plurality of beams may include a synchronization signal, or may include a broadcast signal, or may include a synchronization signal and a broadcast signal.

Further, optionally, when sending the plurality of signals to the terminal on the plurality of beams, the first access device may further send a beam configuration of the first access device to the terminal. The beam configuration of the first access device is used for the terminal to generate a preamble signal sent to the first access device.

The beam configuration of the first access device is preconfigured by the first access device. The beam configuration of the first access device includes at least one preamble allocated by the first access device to each beam of the first access device and time-frequency resource indication information used to send the preamble signal.

Optionally, the beam configuration of the first access device may be broadcast by using the broadcast signal, or the beam configuration of the first access device may be sent to the terminal by using the second access device.

The terminal is within the coverage area of the network provided by the second access device.

Further, if the network provided by the second access device and the network provided by the first access device are co-sited, the second access device may directly obtain and broadcast a beam configuration of each beam configured by the first access device. If the network provided by the second access device and the network provided by the first access device are not co-sited, the second access device may exchange information with the first access device through an X2 interface, to obtain and broadcast a beam configuration of each configured beam.

For example, if the first access device generates 8 beams in the beamforming manner, specific content of the beam configuration of the first access device configured by the first access device for the eight beams includes: a beam 0 is configured with preambles (preamble) 0 to 7, a beam 1 is configured with preambles 8 to 15, ..., and a beam 7 is configured with preambles 56 to 63. Allocated time-frequency resource information indicates: allocating time-frequency resources 0 to 2 to the beam 0, allocating time-frequency resources 3 to 5 to the beam 1, ..., and allocating time-frequency resources 21 to 23 to the beam 7. The beam configuration of the first access device may be stored in a form of Table 1 and sent.

**Table 1**

| **Number of a beam** | **Configured preamble** | **Allocated time-frequency resource** |
|---|---|---|
| 0 | 0-7 | 0-2 |
| 1 | 8-15 | 3-5 |
| 2 | 16-23 | 6-8 |
| 3 | 24-31 | 9-11 |
| 4 | 32-39 | 12-14 |
| 5 | 40-47 | 15-17 |
| 6 | 48-55 | 18-20 |
| 7 | 56-63 | 21-23 |

It should be noted that Table 1 merely uses an example to describe the beam configuration of the first access device, and constitutes no specific limitation on the form and the content of the beam configuration of the first access device. In actual application, the content and the form of the beam configuration of the first access device may be set based on an actual requirement.

Further, optionally, when sending the plurality of signals to the terminal on the plurality of beams, the first access device may further add a beam identifier of each beam to each beam.

The beam identifier may be used to uniquely indicate a beam.

Optionally, the beam identifier described in this embodiment of the present invention may include but is not limited to the following two forms:

Form 1: an explicit beam identifier.

The explicit beam identifier is used to explicitly indicate identification information of a beam. The explicit beam identifier may be directly added to the beam, and may be directly obtained by a receiver.

For example, when sending the plurality of signals on the beams generated in the beamforming manner, the first access device may add an identifier of each beam to a signal sent on each beam. This beam identifier form is provided as the explicit beam identifier described in form 1.

Form 2: an implicit beam identifier.

The implicit beam identifier is used to determine indication information of a beam identifier, and the beam identifier may be obtained after calculation by using the implicit beam identifier.

For example, when sending a downlink synchronization signal on the plurality of beams generated in the beamforming manner, the first access device may implicitly notify the terminal of an identifier of each beam by using a PSS/SSS. A receiver may uniquely determine a beam based on the PSS/SSS, to be specific, obtain an identifier of the beam.

Specifically, if PCIs of beams are different from each other, the receiver may identify different beams by using a PCI uniquely corresponding to the PSS/SSS. If PCIs of beams are the same, the receiver may similarly use an extended PSS/SSS to identify different beams.

The PSS is a sequence transferred on a primary synchronization channel (English full name: primary synchronous channel, P-SCH), and has 3 possible forms; and the SSS is a sequence transferred on a secondary synchronization channel (English full name: Secondary synchronous channel, S-SCH), and has 168 possible forms. A beam ID may be obtained when sequence numbers of the two sequences are combined.

It should be noted that a process in which the beam ID is obtained based on the combination of the two sequences PSS and SSS is not described in this embodiment of the present invention.

Specifically, a plurality of implementations in which the first access device sends the plurality of signals to the terminal on the plurality of beams may include but is not limited to the following five solutions:

### Solution 1:

The first access device sends a broadcast signal to the terminal on the plurality of beams, where the broadcast signal is used to broadcast a beam configuration of the first access device.

It should be noted that in this embodiment of the present invention, a form and a location of the beam configuration of the first access device in the broadcast signal may be set based on an actual requirement. This is not specifically limited in this embodiment of the present invention.

### Solution 2:

The first access device sends a synchronization signal and a broadcast signal to the terminal on the plurality of beams, where the broadcast signal is used to broadcast a beam configuration of the first access device.

### Solution 3:

The first access device sends a synchronization signal to the terminal on the plurality of beams, where the first access device sends a beam configuration of the first access device to the terminal by using the second access device.

### Solution 4:

The first access device sends a broadcast signal to the terminal on the plurality of beams, where a broadcast signal sent on each beam carries a beam identifier of the broadcast signal, and the broadcast signal is used to broadcast a beam configuration of the first access device.

### Solution 5:

The first access device sends a synchronization signal to the terminal on the plurality of beams, where a synchronization signal sent on each beam carries a beam identifier of the synchronization signal.

In solution 5, the first access device may further send a beam configuration of the first access device or a cell configuration to the terminal.

The cell configuration is at least one preamble allocated to the network provided by the first access device and time-frequency resource information used to send the preamble signal. The time-frequency resource information is used to indicate at least one time-frequency resource.

Optionally, in solution 5, that the first access device may further send a beam configuration of the first access device or a cell configuration to the terminal may include: directly sending, by the first access device, the beam configuration of the first access device or the cell configuration to the terminal, or sending, by the first access device, the beam configuration of the first access device or the cell configuration to the terminal by using the second access device.

It should be noted that a cell configuration may be pre-configured in the terminal, and therefore, the cell configuration in solution 5 cannot be sent to the terminal.

It should be further noted that the foregoing five solutions merely use an example to describe the implementation solution of S501, and constitute no specific limitation on an implementation process of S501. In actual application, there may be another implementation of S501. This is not specifically limited in this embodiment of the present invention.

S502. The terminal receives the plurality of signals on the plurality of beams from the first access device.

It should be noted that the signals received by the terminal in S502 are the signals sent by the first access device in S501. Content of the plurality of signals on the plurality of beams is described in detail in S501, and details are not described herein again.

S503. The terminal determines a beam of a strongest signal in the plurality of beams.

S504. The terminal generates a preamble signal for the beam of the strongest signal based on configuration information.

A preamble signal of a beam may uniquely determine the beam.

Optionally, when a preamble signal of a beam is generated, a preamble in the beam configuration of the beam may be selected through contention as the preamble signal, and a time-frequency resource in the beam configuration of the beam may be selected through contention to send the preamble signal. In this way, a receive end may uniquely determine the beam based on the beam configuration, to be specific, by using content of the preamble signal and the time-frequency resource occupied to send the preamble signal.

Optionally, when a preamble signal of a beam is generated, an identifier of the beam may be added to the preamble signal of the beam, so that the receiver can uniquely determine the beam by using the beam identifier carried by the preamble signal.

It should be noted that when a preamble signal of a beam is generated, how to configure a preamble signal of a beam so that the preamble signal of the beam may be used to uniquely determine the beam may be determined based on an actual requirement. This is not specifically limited in this embodiment of the present invention.

The configuration information may include a beam configuration of the beam of the strongest signal, or the configuration information may include an identifier of the beam of the strongest signal and a cell configuration, or the configuration information includes a beam configuration of the beam of the strongest signal and an identifier of the beam of the strongest signal.

Specifically, specific content of the configuration information depends on content sent by the first access device to the terminal. When the first access device sends only a beam configuration of the first access device to the terminal, the configuration information includes the beam configuration of the beam of the strongest signal. When the first access device sends only a beam configuration of the first access device and an identifier of each beam to the terminal, the configuration information includes the beam configuration of the beam of the strongest signal and the identifier of the beam of the strongest signal. When the first access device sends only an identifier of each beam and a cell configuration to the terminal, the configuration information includes the identifier of the beam of the strongest signal and the cell configuration.

Specifically, content of the configuration information is different, and therefore, solutions in which the terminal generates the preamble signal for the beam of the strongest signal based on the configuration information in S504 include but are not limited to the following two solutions.

Solution 1: The configuration information includes the beam configuration of the beam of the strongest signal.

In solution 1, a process that the terminal performs S504 may specifically include:
selecting, by the terminal through contention, one preamble as the preamble signal in at least one preamble included in the beam configuration of the beam of the strongest signal.

For example, it is assumed that the beam configuration of the first access device is shown in Table 1. The terminal determines that the beam 3 is the beam of the strongest signal, to be specific, determines that an optimal beam accessing the first access device is the beam 3. Therefore, when performing S504, the terminal first obtains preambles 24 to 31 in a beam configuration of the beam 3 determined in the beam configuration of the first access device shown in Table 1, and then selects, through contention, one preamble (it is assumed that a preamble 26 is selected) in the preambles 24 to 31 as the preamble signal.

Solution 2: The configuration information includes the cell configuration.

In solution 2, a process that the terminal performs S504 may specifically include:
selecting, by the terminal through contention, one preamble as the preamble signal in at least one preamble included in the cell configuration.

S505. The terminal sends the preamble signal of the beam of the strongest signal to the first access device.

Specifically, content of the configuration information is different, and therefore, solutions in which the terminal sends the preamble signal of the beam of the strongest signal to the first access device in S505 include but are not limited to the following two solutions.

Solution A: The configuration information does not include the identifier of the beam of the strongest signal.

In solution A, corresponding to solution 1 in S504, the solution that the terminal sends the preamble signal to the first access device may be implemented as follows:
The terminal selects, through contention, one time-frequency resource from at least one time-frequency resource indicated by time-frequency resource indication information included in the beam configuration of the beam of the strongest signal, and sends the generated preamble signal to the first access device on the selected time-frequency resource.

For example, corresponding to the example in solution 1 in S504, it is assumed that beam identification information allocated by the first access device is shown in Table 1. The terminal obtains, through contention, one time-frequency resource (it is assumed that a time-frequency resource 10 is obtained through contention) in time-frequency resources 9 to 11 indicated by time-frequency resource information included in the beam configuration of the beam 3, and sends the preamble 26 to the first access device on the time-frequency resource 10.

In solution A, corresponding to solution 2 in S504, the solution that the terminal sends the preamble signal to the first access device may be implemented as follows:

The terminal selects, through contention, one time-frequency resource from at least one time-frequency resource indicated by time-frequency resource indication information included in the cell configuration, and sends the generated preamble signal to the first access device on the selected time-frequency resource.

Solution B: The configuration information includes the identifier of the beam of the strongest signal.

In solution B, corresponding to solution 1 in S504, the solution that the terminal sends the preamble signal to the first access device may be implemented as follows:
The terminal selects, through contention, one time-frequency resource from at least one time-frequency resource indicated by time-frequency resource indication information included in the beam configuration of the beam of the strongest signal, and sends the generated preamble signal to the first access device on the selected time-frequency resource, where the preamble signal carries the identifier of the beam of the strongest signal.

In solution B, corresponding to solution 2 in S504, the solution that the terminal sends the preamble signal to the first access device may be implemented as follows:
The terminal selects, through contention, one time-frequency resource from at least one time-frequency resource indicated by time-frequency resource indication information included in the cell configuration, and sends the generated preamble signal to the first access device on the selected time-frequency resource, where the preamble signal carries the identifier of the beam of the strongest signal.

For example, it is assumed that the beam configuration of the first access device is shown in Table 1. The terminal determines that the beam 3 of the strongest signal is the optimal beam for accessing the network provided by the first access device, and determines that a beam ID in the beam 3 is an ID 3. Therefore, when performing S504, the terminal first selects, through contention, one preamble (it is assumed that a preamble 26 is selected) in preambles 24 to 31 in the beam configuration of the beam 3 shown in Table 1 as the preamble signal, and then obtains, through contention, one time-frequency resource (it is assumed that a time-frequency resource 10 is obtained through contention) in time-frequency resources 9 to 11 indicated by time-frequency resource information in the beam configuration of the beam 3 shown in Table 1. Therefore, the terminal sends the preamble 26 carrying the ID 3 to the first access device on the time-frequency resource 10.

S506. The first access device receives the preamble signal of the beam of the strongest signal, where the preamble signal is sent by the terminal.

It should be noted that the preamble signal received by the first access device in S506 is the preamble signal sent by the terminal in S505, and details are not described herein again.

S507. The first access device identifies, based on the received preamble signal, a beam selected by the terminal to access a network provided by the first access device, and establishes an RRC connection to the terminal.

A preamble signal of a beam may uniquely determine the beam.

Corresponding to generating a preamble signal of a beam in S504, optionally, in S506, when receiving a preamble signal of a beam, the first access device may uniquely determine the beam based on the beam configuration, to be specific, by using content of the preamble signal and a time-frequency resource occupied to send the preamble signal. Alternatively, the first access device may uniquely determine the beam by using a beam identifier carried by the preamble signal.

Optionally, solutions that the terminal sends the preamble signal are different in S505, and therefore, methods that the first access device identifies, based on the preamble signal, the beam on which the terminal accesses a network provided by the first access device are different in S507. Specifically, there are two implementations:

Implementation 1: Corresponding to solution A in S505, the configuration information does not include the identifier of the beam of the strongest signal, the preamble signal sent by the terminal does not carry the identifier of the beam that is of the strongest signal and that is determined by the terminal, and a process in which the first access device performs S507 may specifically include the following steps:

The first access device first obtains the received preamble signal sent by the terminal and the time-frequency resource occupied by the preamble signal, and then searches the beam configuration of the first access device to determine that the beam on which the terminal accesses the network provided by the first access device is a beam corresponding to the received preamble signal sent by the terminal and the time-frequency resource occupied by the preamble signal in the beam configuration of the first access device.

For example, it is assumed that the beam configuration of the first access device is shown in Table 1, and the preamble signal that is received by the first access device on the time-frequency resource 10 and that is sent by the terminal is the preamble 26. The first access device searches the beam configuration of the first access device shown in Table 1, and determines that the beam on which the terminal accesses the first access device is the beam 3 corresponding to the preamble signal (preamble 26) and the time-frequency resource 10 occupied by the preamble signal.

Implementation 2: Corresponding to solution B in S505, the configuration information includes the identifier of the beam of the strongest signal, and the preamble signal sent by the terminal carries the identifier of the beam that is of the strongest signal and that is determined by the terminal.

In implementation 2, a process in which the first access device performs S507 may specifically include the following step:

The first access device identifies that the beam selected by the terminal to access the network provided by the first access device is a beam indicated by the beam identifier included in the preamble signal received by the first access device.

Further, when a coverage area of the network provided by the first access device is larger than a coverage area provided by a third access device, the third access device may send a beam configuration of the third access device or a cell configuration to the terminal by using the first access device. In this case, the method may further include the following steps:

A first receiving device receives the beam configuration of the third access device or the cell configuration sent by the third access device, and then broadcasts the beam configuration of the third access device or the cell configuration.

According to the random access method provided in this embodiment of the present invention, before accessing the first access device, to be specific, in an initial access stage of the terminal, the terminal has determined that the beam of the strongest signal is used as the beam accessing the first access device, and sends the preamble signal of the determined beam of the strongest signal to the first access device. Therefore, the first access device may identify, based on the received preamble signal, the beam that is of the strongest signal and that is determined by the terminal, and establish the connection to the terminal by using the beam, so as to complete the random access for the terminal. In the process, the terminal accesses the beam of the first access device in time. This increases a success rate at which the terminal accesses the first access device.

The foregoing mainly describes the solutions provided in the embodiments of the present invention from the perspective of interaction between network elements. It may be understood that, to implement the foregoing function, each network element, such as the terminal and the first access device, includes a corresponding hardware structure and/or software module to perform each function. A person of ordinary skill in the art should be easily aware that, the units and algorithm steps in the examples described with reference to the embodiments disclosed in this specification may be implemented by hardware or a combination of hardware and computer software in the present invention. Whether the function is performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

In this embodiment of the present invention, function module division may be performed on the terminal, the first access device, and the like based on the foregoing method example, for example, function modules may be divided based on functions, or two or more functions may be integrated in one processing module. The integrated module may be implemented in a form of hardware, or may be implemented in a form of a functional module of software. It should be noted that the module division in the embodiments of the present invention is an example, and is merely logical function division. There may be another division manner in an actual implementation.

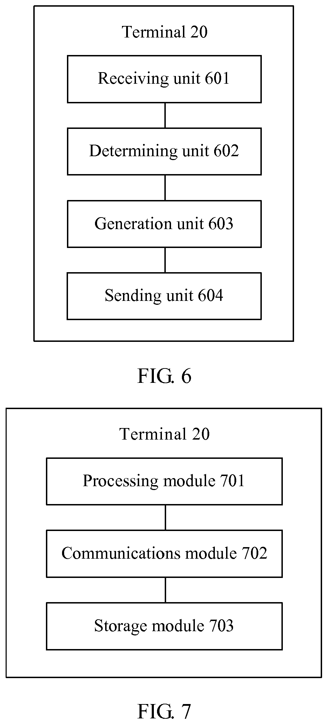

In a case of dividing function modules based on functions, FIG. 6 is a possible schematic structural diagram of the terminal 20 in the foregoing embodiments. The terminal 20 includes a receiving unit 601, a determining unit 602, a generation unit 603, and a sending unit 604. The receiving unit 601 is configured to support the terminal 20 in performing the process S502 in FIG. 5, the determining unit 602 is configured to support the terminal 20 in performing the process S503 in FIG. 5, the generation unit 603 is configured to support the terminal 20 in performing the process S504 in FIG. 5, and the sending unit 604 is configured to support the terminal 20 in performing the process S505 in FIG. 5. All related content of steps in the foregoing method embodiments may be cited in function description of corresponding function modules, and details are not described herein again.

In a case of an integrated unit, FIG. 7 shows a possible schematic structural diagram of the terminal 20 in the foregoing embodiments. The terminal 20 may include a processing module 701 and a communications module 702. The processing module 701 is configured to perform control management on actions of the terminal 20. For example, the processing module 701 is configured to support the terminal 20 in performing the processes S503 and S504 in FIG. 5, and/or another process of technologies described in this specification. The processing module 701 is further configured to support the terminal 20 in performing the processes S502 and S505 in FIG. 5 by using the communications module 702. The communications module 702 is configured to support the terminal 20 in communicating with another network entity. The terminal 20 may further include a storage module 703, configured to store program code and data of the terminal 20.

The processing module 701 may be the processor 201 in an entity structure of the terminal 20 shown in FIG. 2, may be a processor or a controller such as a CPU, a general purpose processor, a DSP, an ASIC, an FPGA, or another programmable logic device, a transistor logic device, a hardware component, or any combination thereof. It may implement or execute various examples of logical blocks, modules, and circuits that are described with reference to the content disclosed in the present invention. The processor may be a combination of computing functions, for example, a combination of one or more microprocessors or a combination of a DSP and a microprocessor. The communications module 702 may be the transceiver in the entity structure of the terminal 20 shown in FIG. 2, or may be a transceiver circuit, a communications interface, or the like. The storage module 703 may be the memory in the entity structure of the terminal 20 shown in FIG. 2.

When the processing module 701 is the processor, the communications module 702 is the transceiver, and the storage module 703 is the memory, the terminal 20 in FIG. 7 in this embodiment of the present invention may be the terminal 20 shown in FIG. 2.

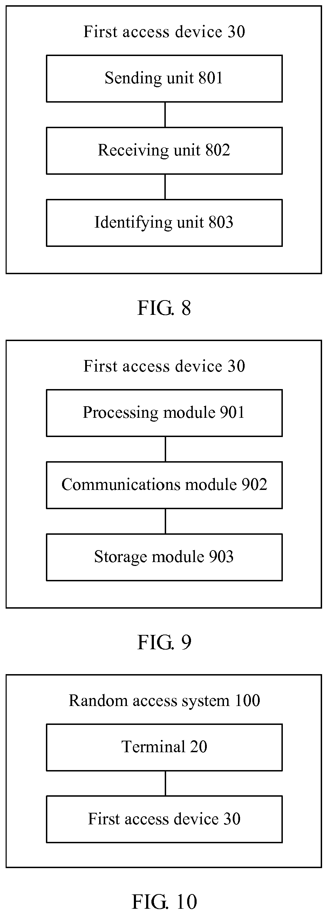

In a case of dividing function modules based on functions, FIG. 8 shows a possible schematic structural diagram of the first access device 30 in the foregoing embodiments. The first access device 30 includes a sending unit 801, a receiving unit 802, and an identifying unit 803. The sending unit 801 is configured to support the first access device 30 in performing the process S501 in FIG. 5, the receiving unit 802 is configured to support the first access device 30 in performing the process S506 in FIG. 5, and the identifying unit 803 is configured to support the first access device 30 in performing the process S507 in FIG. 5. All related content of steps in the foregoing method embodiments may be cited in function description of corresponding function modules, and details are not described herein again.

In a case of an integrated unit, FIG. 9 shows a possible schematic structural diagram of the first access device 30 in the foregoing embodiments. The first access device 30 may include a processing module 901 and a communications module 902. The processing module 901 is configured to perform control management on actions of the first access device 30. For example, the processing module 901 is configured to support the first access device 30 in performing the process S507 in FIG. 5, and/or another process of technologies described in this specification. The processing module 901 is further configured to support the first access device 30 in performing the processes S501 and S506 in FIG. 5 by using the communications module 902. The communications module 902 is configured to support the first access device 30 in communicating with another network entity. The first access device 30 may further include a storage module 903, configured to store program code and data of the first access device 30.

The processing module 901 may be the processor 301 in an entity structure of the first access device 30 shown in FIG. 3, may be a processor or a controller such as a CPU, a general purpose processor, a DSP, an ASIC, an FPGA, or another programmable logic device, a transistor logic device, a hardware component, or any combination thereof. It may implement or execute various examples of logical blocks, modules, and circuits that are described with reference to the content disclosed in the present invention. The processor may be a combination of computing functions, for example, a combination of one or more microprocessors or a combination of a DSP and a microprocessor. The communications module 902 may be the transceiver in the entity structure of the first access device 30 shown in FIG. 3, or may be a transceiver circuit, a communications interface, or the like. The storage module 903 may be the memory in the entity structure of the first access device 30 shown in FIG. 2.

When the processing module 901 is the processor, the communications module 902 is the transceiver, and the storage module 903 is the memory, the first access device 30 in FIG. 9 in this embodiment of the present invention may be the first access device 30 shown in FIG. 3.

The methods or algorithm steps described with reference to the content disclosed in the present invention may be implemented in a hardware manner, or may be implemented in a manner of executing a software instruction by a processor. The software instruction may include a corresponding software module. The software module may be stored in a RAM, a flash memory, a ROM, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other forms well-known in the art. A storage medium used as an example is coupled to the processor, so that the processor can read information from the storage medium, and can write information into the storage medium. Certainly, the storage medium may be a part of the processor. The processor and the storage medium may be located in an ASIC. In addition, the ASIC may be located in a core network interface device. Certainly, the processor and the storage medium may exist in the core network interface device as discrete components.

In addition, an embodiment of the present invention provides a random access system 100. As shown in FIG. 10, the random access system 100 may include:
at least one terminal 20 described in any of the foregoing embodiments and at least one first access device 30 described in any of the foregoing embodiments.

It should be further noted that FIG. 10 merely describes an example of an architecture of the random access system 100, and constitutes no limitation on quantities of the terminals 20 and the first access devices 30 included in the random access system 100.

A person of skill in the art should be aware that in one or more of the foregoing examples, the functions described in the present invention may be implemented by using hardware, software, firmware, or any combination thereof. When the present invention is implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general or dedicated computer. It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical or other forms.

The units described as separate components may or may not be physically separate, and components displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

## Claims

1. A random access method, wherein the method comprises:
receiving (S502), by a terminal, a plurality of signals on a plurality of beams from a first access device, wherein the plurality of beams are generated in a beamforming manner;
determining (S503), by the terminal, a beam of a strongest signal in the plurality of beams;
generating (S504), by the terminal, a preamble signal for the beam of the strongest signal based on configuration information; and
sending (S505), by the terminal, the preamble signal to the first access device;
wherein the method further comprises:
receiving, by the terminal, a beam configuration of the first access device, from a second access device, wherein the beam configuration of the first access device is preconfigured by the first access device, and the beam configuration of the first access device includes at least one preamble allocated by the first access device to each beam of the first access device and time-frequency resource indication information used to send the preamble signal, wherein at least one time-frequency resource is allocated by the first access device to each beam of the first access device.

2. The method according to claim 1, wherein the configuration information comprises a beam configuration of the beam of the strongest signal, and the receiving (S502), by a terminal, a plurality of signals on a plurality of beams from a first access device comprises:
receiving, by the terminal, a broadcast signal on the beam of the strongest signal, wherein the broadcast signal is used to broadcast the beam configuration.

3. The method according to claim 2, wherein the receiving (S502), by a terminal, a plurality of signals on a plurality of beams from a first access device further comprises:
receiving, by the terminal, a synchronization signal on the beam of the strongest signal.

4. The method according to claim 1, wherein the configuration information comprises an identifier of the beam of the strongest signal and a cell configuration, or the configuration information comprises a beam configuration of the beam of the strongest signal and an identifier of the beam of the strongest signal, and the receiving (S502), by a terminal, a plurality of signals on a plurality of beams from a first access device comprises:
receiving, by the terminal, a synchronization signal or a broadcast signal on the beam of the strongest signal, wherein the synchronization signal or the broadcast signal carries the identifier of the beam of the strongest signal.

5. The method according to claim 4, wherein:
the method further comprises: receiving, by the terminal, the cell configuration or the beam configuration from a second access device; or
the broadcast signal is used to broadcast the cell configuration or the beam configuration.

6. A random access method, wherein the method comprises:
sending (S501), by a first access device, a plurality of signals to a terminal on a plurality of beams, wherein the plurality of beams are generated in a beamforming manner;
receiving (S506), by the first access device, a preamble signal of a beam of a strongest signal, wherein the preamble signal is sent by the terminal; and
identifying (S507), by the first access device based on the preamble signal, a beam on which the terminal accesses a network provided by the first access device, and establishing a radio resource control RRC connection to the terminal;
wherein the method further comprises:
sending, by the first access device, a beam configuration of the first access device to the terminal by using a second access device, wherein the beam configuration of the first access device is preconfigured by the first access device, and the beam configuration of the first access device includes at least one preamble allocated by the first access device to each beam of the first access device and time-frequency resource indication information used to send the preamble signal, wherein at least one time-frequency resource is allocated by the first access device to each beam of the first access device.

7. The method according to claim 6, wherein the sending (S501), by a first access device, a plurality of signals to a terminal on a plurality of beams comprises:
sending, by the first access device, a broadcast signal to the terminal on the plurality of beams, wherein the broadcast signal is used to broadcast a beam configuration of the first access device; and
the identifying (S507), by the first access device based on the preamble signal, a beam on which the terminal accesses a network provided by the first access device, and establishing an RRC connection to the terminal comprises:
identifying, by the first access device based on the preamble signal and the beam configuration, the beam on which the terminal accesses the network provided by the first access device, and establishing the RRC connection.

8. The method according to claim 7, wherein the sending (S501), by a first access device, a plurality of signals to a terminal on a plurality of beams further comprises:
sending, by the first access device, a synchronization signal to the terminal on the plurality of beams.

9. The method according to claim 6, wherein the sending (S501), by a first access device, a plurality of signals to a terminal on a plurality of beams comprises:
sending, by the first access device, a synchronization signal or a broadcast signal to the terminal on the plurality of beams, wherein the synchronization signal or the broadcast signal carries an identifier of each beam.

10. The method according to claim 9, wherein the preamble signal carries an identifier of the beam that is of the strongest signal and that is determined by the terminal.

11. The method according to claim 9 or 10, wherein:
the method further comprises: sending, by the first access device, a beam configuration of the first access device or a cell configuration to the terminal by using a second access device; or
the broadcast signal is used to broadcast the cell configuration or the beam configuration.

12. A terminal (20), wherein the terminal (20) comprises a processor (201) and a transceiver (203), and the processor (201) is configured to:
receive a plurality of signals on a plurality of beams from a first access device (30) by using the transceiver, wherein the plurality of beams are generated in a beamforming manner;
determine a beam of a strongest signal in the plurality of beams;
generate a preamble signal for the beam of the strongest signal based on configuration information; and
send the preamble signal to the first access device (30) by using the transceiver (203);
wherein the terminal (20) is further configured to:
receive a beam configuration of the first access device (30), from a second access device, wherein the beam configuration of the first access device is preconfigured by the first access device (30), and the beam configuration of the first access device (30) includes at least one preamble allocated by the first access device (30) to each beam of the first access device (30) and time-frequency resource indication information used to send the preamble signal, wherein at least one time-frequency resource is allocated by the first access device (30) to each beam of the first access device (30).

13. The terminal (20) according to claim 12, wherein the configuration information comprises a beam configuration of the beam of the strongest signal, and the processor (201) is specifically configured to:
receive a broadcast signal on the beam of the strongest signal by using the transceiver (203), wherein the broadcast signal is used to broadcast the beam configuration.

14. A first access device (30), wherein the first access device (30) comprises a processor (301) and a transceiver (303), and the processor (301) is specifically configured to:
send a plurality of signals to a terminal (20) on a plurality of beams by using the transceiver (303), wherein the plurality of beams are generated in a beamforming manner;
receive, by using the transceiver, a preamble signal of a beam of a strongest signal, wherein the preamble signal is sent by the terminal (20); and
identify, based on the preamble signal, a beam on which the terminal (20) accesses a network provided by the first access device (30), and establish a radio resource control RRC connection to the terminal (20);
wherein the first access device (30) is further configured to:
send a beam configuration of the first access device (30) to the terminal (20) by using a second access device, wherein the beam configuration of the first access device is preconfigured by the first access device, and the beam configuration of the first access device (30) includes at least one preamble allocated by the first access device (30) to each beam of the first access device (30) and time-frequency resource indication information used to send the preamble signal, wherein at least one time-frequency resource is allocated by the first access device (30) to each beam of the first access device (30).

15. A random access system, comprising:
at least one terminal (20) according to claim 12 or 13; and
at least one first access device (30) according to claim 14.

## Patentansprüche

1. Direktzugriffsverfahren, wobei das Verfahren Folgendes umfasst:
Empfangen (S502), durch ein Endgerät, mehrerer Signale auf mehreren Strahlen von einer ersten Zugriffsvorrichtung, wobei die mehreren Strahlen in einer Beamforming-Weise erzeugt werden;
Bestimmen (S503), durch das Endgerät, eines Strahls eines stärksten Signals aus den mehreren Strahlen;
Erzeugen (S504), durch das Endgerät, eines Präambelsignals für den Strahl des stärksten Signals basierend auf Konfigurationsinformationen; und
Senden (S505), durch das Endgerät, des Präambelsignals an die erste Zugriffsvorrichtung;
wobei das Verfahren ferner Folgendes umfasst: Empfangen, durch das Endgerät, einer Strahlkonfiguration der ersten Zugriffsvorrichtung von einer zweiten Zugriffsvorrichtung, wobei die Strahlkonfiguration der ersten Zugriffsvorrichtung durch die erste Zugriffsvorrichtung vorkonfiguriert ist und die Strahlkonfiguration der ersten Zugriffsvorrichtung wenigstens eine Präambel, die durch die erste Zugriffsvorrichtung jedem Strahl der ersten Zugriffsvorrichtung zugewiesen ist, und Zeit-Frequenz-Ressourcenanzeigeinformationen einschließt, die verwendet werden, um das Präambelsignal zu senden, wobei wenigstens eine Zeit-Frequenz-Ressource durch die erste Zugriffsvorrichtung jedem Strahl der ersten Zugangsvorrichtung zugewiesen ist.

2. Verfahren nach Anspruch 1, wobei die Konfigurationsinformationen eine Strahlkonfiguration des Strahls des stärksten Signals umfassen und das Empfangen (S502), durch ein Endgerät, mehrerer Signale auf mehreren Strahlen von einer ersten Zugriffsvorrichtung Folgendes umfasst:
Empfangen, durch das Endgerät, eines Rundfunksignals auf dem Strahl des stärksten Signals, wobei das Rundfunksignal verwendet wird, um die Strahlkonfiguration rundzusenden.

3. Verfahren nach Anspruch 2, wobei das Empfangen (S502), durch ein Endgerät, mehrerer Signale auf mehreren Strahlen von einer ersten Zugriffsvorrichtung ferner Folgendes umfasst:
Empfangen, durch das Endgerät, eines Synchronisationssignals auf dem Strahl des stärksten Signals.

4. Verfahren nach Anspruch 1, wobei die Konfigurationsinformationen ein Kennzeichen des Strahls des stärksten Signals und eine Zellenkonfiguration umfassen, oder die Konfigurationsinformationen eine Strahlkonfiguration des Strahls des stärksten Signals und ein Kennzeichen des Strahls des stärksten Signals umfassen, und das Empfangen (S502), durch ein Endgerät, mehrerer Signale auf mehreren Strahlen von einer ersten Zugriffsvorrichtung Folgendes umfasst:
Empfangen, durch das Endgerät, eines Synchronisationssignals oder eines Rundfunksignals auf dem Strahl des stärksten Signals, wobei das Synchronisationssignal oder das Rundfunksignal das Kennzeichen des Strahls des stärksten Signals trägt.

5. Verfahren nach Anspruch 4, wobei:
das Verfahren ferner Folgendes umfasst:
Empfangen, durch das Endgerät, der Zellenkonfiguration oder der Strahlkonfiguration von einer zweiten Zugriffsvorrichtung; oder
wobei das Rundfunksignal verwendet wird, um die Zellenkonfiguration oder die Strahlkonfiguration rundzusenden.

6. Direktzugriffsverfahren, wobei das Verfahren Folgendes umfasst:
Senden (S501), durch eine erste Zugriffsvorrichtung, mehrerer Signale an ein Endgerät auf mehreren Strahlen, wobei die mehreren Strahlen in einer Beamforming-Weise erzeugt werden;
Empfangen (S506), durch die erste Zugriffsvorrichtung, eines Präambelsignals eines Strahls eines stärksten Signals, wobei das Präambelsignal durch das Endgerät gesendet wird; und
Kennzeichnen (S507), durch die erste Zugriffsvorrichtung basierend auf dem Präambelsignal, eines Strahls, auf dem das Endgerät auf ein Netzwerk zugreift, das durch die erste Zugriffsvorrichtung bereitgestellt wird, und Herstellen einer Radio-Resource-Control(RRC)-Verbindung zu dem Endgerät;
wobei das Verfahren ferner Folgendes umfasst: Senden, durch die erste Zugriffsvorrichtung, einer Strahlkonfiguration der ersten Zugriffsvorrichtung an das Endgerät durch Verwenden einer zweiten Zugriffsvorrichtung, wobei die Strahlkonfiguration der ersten Zugriffsvorrichtung durch die erste Zugriffsvorrichtung vorkonfiguriert ist und die Strahlkonfiguration der ersten Zugriffsvorrichtung wenigstens eine Präambel, die durch die erste Zugriffsvorrichtung jedem Strahl der ersten Zugriffsvorrichtung zugewiesen ist, und Zeit-Frequenz-Ressourcenanzeigeinformationen einschließt, die verwendet werden, um das Präambelsignal zu senden, wobei wenigstens eine Zeit-Frequenzressource durch die erste Zugriffsvorrichtung jedem Strahl der ersten Zugangsvorrichtung zugewiesen ist.

7. Verfahren nach Anspruch 6, wobei das Senden (S501), durch eine erste Zugriffsvorrichtung, mehrerer Signale an ein Endgerät auf mehreren Strahlen Folgendes umfasst:
Senden, durch die erste Zugriffsvorrichtung, eines Rundfunksignals an das Endgerät auf den mehreren Strahlen, wobei das Rundfunksignal verwendet wird, um eine Strahlkonfiguration der ersten Zugriffsvorrichtung rundzusenden; und
wobei das Kennzeichnen (S507), durch die erste Zugriffsvorrichtung basierend auf dem Präambelsignal, eines Strahls, auf dem das Endgerät auf ein Netzwerk zugreift, das durch die erste Zugriffsvorrichtung bereitgestellt wird, und das Herstellen einer RRC-Verbindung zu dem Endgerät Folgendes umfasst:
Kennzeichnen, durch die erste Zugriffsvorrichtung basierend auf dem Präambelsignal und der Strahlkonfiguration, des Strahls, auf dem das Endgerät auf das Netzwerk zugreift, das durch die erste Zugriffsvorrichtung bereitgestellt wird, und Herstellen der RRC-Verbindung.

8. Verfahren nach Anspruch 7, wobei das Senden (S501), durch eine erste Zugriffsvorrichtung, mehrerer Signale an ein Endgerät auf mehreren Strahlen ferner Folgendes umfasst:
Senden, durch die erste Zugriffsvorrichtung, eines Synchronisationssignals an das Endgerät auf den mehreren Strahlen.

9. Verfahren nach Anspruch 6, wobei das Senden (S501), durch eine erste Zugriffsvorrichtung, mehrerer Signale an ein Endgerät auf mehreren Strahlen Folgendes umfasst:
Senden, durch die erste Zugriffsvorrichtung, eines Synchronisationssignals oder eines Rundfunksignals an das Endgerät auf den mehreren Strahlen, wobei das Synchronisationssignal oder das Rundfunksignal ein Kennzeichen jedes Strahls trägt.

10. Verfahren nach Anspruch 9, wobei das Präambelsignal ein Kennzeichen des Strahls trägt, der das stärkste Signal aufweist und der durch das Endgerät bestimmt wird.

11. Verfahren nach Anspruch 9 oder 10, wobei:
das Verfahren ferner Folgendes umfasst:
Senden, durch die erste Zugriffsvorrichtung, einer Strahlkonfiguration der ersten Zugriffsvorrichtung oder einer Zellenkonfiguration an das Endgerät durch Verwenden einer zweiten Zugriffsvorrichtung; oder
wobei das Rundfunksignal verwendet wird, um die Zellenkonfiguration oder die Strahlkonfiguration rundzusenden.

12. Endgerät (20), wobei das Endgerät (20) einen Prozessor (201) und einen Sendeempfänger (203) umfasst, und der Prozessor (201) für Folgendes konfiguriert ist:
Empfangen mehrerer Signale auf mehreren Strahlen von einer ersten Zugriffsvorrichtung (30) durch Verwenden des Sendeempfängers, wobei die mehreren Strahlen in einer Beamforming-Weise erzeugt werden;
Bestimmen eines Strahls eines stärksten Signals aus den mehreren Strahlen;
Erzeugen eines Präambelsignals für den Strahl des stärksten Signals basierend auf Konfigurationsinformationen; und
Senden des Präambelsignals an die erste Zugriffsvorrichtung (30) durch Verwenden des Sendeempfängers (203);
wobei das Endgerät (20) ferner für Folgendes konfiguriert ist:
Empfangen einer Strahlkonfiguration der ersten Zugriffsvorrichtung (30) von einer zweiten Zugriffsvorrichtung, wobei die Strahlkonfiguration der ersten Zugriffsvorrichtung durch die erste Zugriffsvorrichtung (30) vorkonfiguriert ist und die Strahlkonfiguration der ersten Zugriffsvorrichtung (30) wenigstens eine Präambel, die durch die erste Zugriffsvorrichtung (30) jedem Strahl der ersten Zugriffsvorrichtung (30) zugewiesen ist, und Zeit-Frequenz-Ressourcenanzeigeinformationen einschließt, die verwendet werden, um das Präambelsignal zu senden, wobei wenigstens eine Zeit-Frequenz-Ressource durch die erste Zugriffsvorrichtung (30) jedem Strahl der ersten Zugangsvorrichtung (30) zugewiesen ist.

13. Endgerät (20) nach Anspruch 12, wobei die Konfigurationsinformationen eine Strahlkonfiguration des Strahls des stärksten Signals umfassen und der Prozessor (201) speziell für Folgendes konfiguriert ist:
Empfangen eines Rundfunksignals auf dem Strahl des stärksten Signals durch Verwenden des Sendeempfängers (203), wobei das Rundfunksignal verwendet wird, um die Strahlkonfiguration rundzusenden.

14. Erste Zugriffsvorrichtung (30), wobei die erste Zugriffsvorrichtung (30) einen Prozessor (301) und einen Sendeempfänger (303) umfasst, und der Prozessor (301) speziell für Folgendes konfiguriert ist:
Senden mehrerer Signale an ein Endgerät (20) auf mehreren Strahlen durch Verwenden des Sendeempfängers (303), wobei die mehreren Strahlen in einer Beamforming-Weise erzeugt werden;
Empfangen, durch Verwenden des Sendeempfängers, eines Präambelsignals eines Strahls eines stärksten Signals, wobei das Präambelsignal durch das Endgerät (20) gesendet wird; und
Kennzeichnen, basierend auf dem Präambelsignal, eines Strahls, auf dem das Endgerät (20) auf ein Netzwerk zugreift, das durch die erste Zugriffsvorrichtung (30) bereitgestellt wird, und Herstellen einer Radio-Resource-Control(RRC)-Verbindung zu dem Endgerät (20);
wobei die erste Zugriffsvorrichtung (30) ferner für Folgendes konfiguriert ist:
Senden einer Strahlkonfiguration der ersten Zugriffsvorrichtung (30) an das Endgerät (20) durch Verwenden einer zweiten Zugriffsvorrichtung, wobei die Strahlkonfiguration der ersten Zugriffsvorrichtung durch die erste Zugriffsvorrichtung vorkonfiguriert ist und die Strahlkonfiguration der ersten Zugriffsvorrichtung (30) wenigstens eine Präambel, die durch die erste Zugriffsvorrichtung (30) jedem Strahl der ersten Zugriffsvorrichtung (30) zugewiesen ist, und Zeit-Frequenz-Ressourcenanzeigeinformationen einschließt, die verwendet werden, um das Präambelsignal zu senden, wobei wenigstens eine Zeit-Frequenzressource durch die erste Zugriffsvorrichtung (30) jedem Strahl der ersten Zugangsvorrichtung (30) zugewiesen ist.

15. Direktzugriffssystem, Folgendes umfassend:
wenigstens ein Endgerät (20) nach Anspruch 12 oder 13; und
wenigstens eine ersten Zugriffsvorrichtung (30) nach Anspruch 14.

## Revendications

1. Procédé d'accès aléatoire, le procédé comprenant :
la réception (S502), par un terminal, d'une pluralité de signaux sur une pluralité de faisceaux à partir d'un premier dispositif d'accès, la pluralité de faisceaux étant générée par formation de faisceaux ;
la détermination (S503), par le terminal, d'un faisceau ayant le signal le plus fort dans la pluralité de faisceaux ;
la génération (S504), par le terminal, d'un signal de préambule pour le faisceau ayant le signal le plus fort sur la base d'informations de configuration ; et
l'envoi (S505), par le terminal, du signal de préambule au premier dispositif d'accès ;
le procédé comprenant en outre
la réception, par le terminal, d'une configuration de faisceau du premier dispositif d'accès, à partir d'un second dispositif d'accès, la configuration de faisceau du premier dispositif d'accès étant préconfigurée par le premier dispositif d'accès, et la configuration de faisceau du premier dispositif d'accès comportant au moins un préambule attribué par le premier dispositif d'accès à chaque faisceau du premier dispositif d'accès et des informations d'indication de ressources de temps-fréquence utilisées pour envoyer le signal de préambule, au moins une ressource de temps-fréquence étant attribuée par le premier dispositif d'accès à chaque faisceau du premier dispositif d'accès.

2. Procédé selon la revendication 1, les informations de configuration comprenant une configuration de faisceau du faisceau ayant le signal le plus fort, et la réception (S502), par un terminal, d'une pluralité de signaux sur une pluralité de faisceaux à partir d'un premier dispositif d'accès comprenant :
la réception, par le terminal, d'un signal de diffusion sur le faisceau ayant le signal le plus fort, le signal de diffusion étant utilisé pour diffuser la configuration de faisceau.

3. Procédé selon la revendication 2, la réception (S502), par un terminal, d'une pluralité de signaux sur une pluralité de faisceaux en provenance d'un premier dispositif d'accès comprenant en outre :
la réception, par le terminal, d'un signal de synchronisation sur le faisceau ayant le signal le plus fort.

4. Procédé selon la revendication 1, les informations de configuration comprenant un identifiant du faisceau ayant le signal le plus fort et une configuration de cellule, ou les informations de configuration comprenant une configuration de faisceau ayant le signal le plus fort et un identifiant du faisceau ayant le signal le plus fort, et la réception (S502), par un terminal, d'une pluralité de signaux sur une pluralité de faisceaux en provenance d'un premier dispositif d'accès comprenant :
la réception, par le terminal, d'un signal de synchronisation ou d'un signal de diffusion sur le faisceau ayant le signal le plus fort, le signal de synchronisation ou le signal de diffusion portant l'identifiant du faisceau ayant le signal le plus fort.

5. Procédé selon la revendication 4 :
le procédé comprenant en outre :
la réception, par le terminal, de la configuration de cellule ou de la configuration de faisceau à partir d'un second dispositif d'accès ; ou
le signal de diffusion étant utilisé pour diffuser la configuration de cellule ou la configuration de faisceau.

6. Procédé d'accès aléatoire, le procédé comprenant :
l'envoi (S501), par un premier dispositif d'accès, d'une pluralité de signaux à un terminal sur une pluralité de faisceaux, la pluralité de faisceaux étant générée par formation de faisceaux ;
la réception (S506), par le premier dispositif d'accès, d'un signal de préambule d'un faisceau ayant le signal le plus fort, le signal de préambule étant envoyé par le terminal ; et
l'identification (S507), par le premier dispositif d'accès sur la base du signal de préambule, d'un faisceau sur lequel le terminal accède à un réseau fourni par le premier dispositif d'accès, et l'établissement d'une connexion de commande de ressources radio, RRC, au terminal ;
le procédé comprenant en outre
l'envoi, par le premier dispositif d'accès, d'une configuration de faisceau du premier dispositif d'accès au terminal en utilisant un second dispositif d'accès, la configuration de faisceau du premier dispositif d'accès étant préconfigurée par le premier dispositif d'accès, et la configuration de faisceau du premier dispositif d'accès comportant au moins un préambule attribué par le premier dispositif d'accès à chaque faisceau du premier dispositif d'accès et des informations d'indication de ressources de temps-fréquence utilisées pour envoyer le signal de préambule, au moins une ressource de temps-fréquence étant attribuée par le premier dispositif d'accès à chaque faisceau du premier dispositif d'accès.

7. Procédé selon la revendication 6, l'envoi (S501), par un premier dispositif d'accès, d'une pluralité de signaux à un terminal sur une pluralité de faisceaux comprenant :
l'envoi, par le premier dispositif d'accès, d'un signal de diffusion au terminal sur la pluralité de faisceaux, le signal de diffusion étant utilisé pour diffuser une configuration de faisceau du premier dispositif d'accès ; et
l'identification (S507), par le premier dispositif d'accès sur la base du signal de préambule, d'un faisceau sur lequel le terminal accède à un réseau fourni par le premier dispositif d'accès, et l'établissement d'une connexion RRC au terminal comprenant :
l'identification, par le premier dispositif d'accès sur la base du signal de préambule et de la configuration de faisceau, du faisceau sur lequel le terminal accède au réseau fourni par le premier dispositif d'accès, et l'établissement de la connexion RRC.

8. Procédé selon la revendication 7, l'envoi (S501), par un premier dispositif d'accès, d'une pluralité de signaux à un terminal sur une pluralité de faisceaux comprenant en outre :
l'envoi, par le premier dispositif d'accès, d'un signal de synchronisation au terminal sur la pluralité de faisceaux.

9. Procédé selon la revendication 6, l'envoi (S501), par un premier dispositif d'accès, d'une pluralité de signaux à un terminal sur une pluralité de faisceaux comprenant :
l'envoi, par le premier dispositif d'accès, d'un signal de synchronisation ou d'un signal de diffusion au terminal sur la pluralité de faisceaux, le signal de synchronisation ou le signal de diffusion portant un identifiant de chaque faisceau.

10. Procédé selon la revendication 9, le signal de préambule portant un identifiant du faisceau ayant le signal le plus fort et qui est déterminé par le terminal.

11. Procédé selon la revendication 9 ou la revendication 10 :
le procédé comprenant en outre : l'envoi, par le premier dispositif d'accès, d'une configuration de faisceau du premier dispositif d'accès ou d'une configuration de cellule au terminal en utilisant un second dispositif d'accès ; ou
le signal de diffusion étant utilisé pour diffuser la configuration de cellule ou la configuration de faisceau.

12. Terminal (20), le terminal (20) comprenant un processeur (201) et un émetteur-récepteur (203), et le processeur (201) étant configuré pour :
recevoir une pluralité de signaux sur une pluralité de faisceaux à partir d'un premier dispositif d'accès (30) en utilisant l'émetteur-récepteur, la pluralité de faisceaux étant générée par formation de faisceaux ;
déterminer un faisceau ayant le signal le plus fort dans la pluralité de faisceaux ;
générer un signal de préambule pour le faisceau ayant le signal le plus fort sur la base d'informations de configuration ; et
envoyer le signal de préambule au premier dispositif d'accès (30) en utilisant l'émetteur-récepteur (203) ;
le terminal (20) étant en outre configuré pour :
recevoir une configuration de faisceau du premier dispositif d'accès (30), à partir d'un second dispositif d'accès, la configuration de faisceau du premier dispositif d'accès étant préconfigurée par le premier dispositif d'accès (30), et la configuration de faisceau du premier dispositif d'accès (30) comportant au moins un préambule attribué par le premier dispositif d'accès (30) à chaque faisceau du premier dispositif d'accès (30) et des informations d'indication de ressource de temps-fréquence utilisées pour envoyer le signal de préambule, au moins une ressource de temps-fréquence étant attribuée par le premier dispositif d'accès (30) à chaque faisceau du premier dispositif d'accès (30).

13. Terminal (20) selon la revendication 12, les informations de configuration comprenant une configuration de faisceau ayant le signal le plus fort, et le processeur (201) étant spécifiquement configuré pour :
recevoir un signal de diffusion sur le faisceau ayant le signal le plus fort en utilisant l'émetteur-récepteur (203), le signal de diffusion étant utilisé pour diffuser la configuration du faisceau.

14. Premier dispositif d'accès (30), le premier dispositif d'accès (30) comprenant un processeur (301) et un émetteur-récepteur (303), et le processeur (301) étant spécifiquement configuré pour :
envoyer une pluralité de signaux à un terminal (20) sur une pluralité de faisceaux en utilisant l'émetteur-récepteur (303), la pluralité de faisceaux étant générée par formation de faisceaux ;
recevoir, en utilisant l'émetteur-récepteur, un signal de préambule d'un faisceau ayant le signal le plus fort, le signal de préambule étant envoyé par le terminal (20) ; et
identifier, sur la base du signal de préambule, un faisceau sur lequel le terminal (20) accède à un réseau fourni par le premier dispositif d'accès (30), et établir une connexion de commande de ressources radio, RRC, au terminal (20) ;
le premier dispositif d'accès (30) étant en outre configuré pour :
envoyer une configuration de faisceau du premier dispositif d'accès (30) au terminal (20) en utilisant un second dispositif d'accès, la configuration de faisceau du premier dispositif d'accès étant préconfigurée par le premier dispositif d'accès, et la configuration du premier dispositif d'accès, le dispositif (30) comportant au moins un préambule attribué par le premier dispositif d'accès (30) à chaque faisceau du premier dispositif d'accès (30) et des informations d'indication de ressources de temps-fréquence utilisées pour envoyer le signal de préambule, au moins une ressource de temps-fréquence étant attribuée par le premier dispositif d'accès (30) à chaque faisceau du premier dispositif d'accès (30).

15. Système d'accès aléatoire, comprenant :
au moins un terminal (20) selon la revendication 12 ou 13 ; et
au moins un premier dispositif d'accès (30) selon la revendication 14.
